# EUROPEAN PATENT SPECIFICATION

(11) **EP 1 832 759 B1**
(45) Date of publication and mention of the grant of the patent: **10.04.2013**
(21) Application number: 07002305.6
(22) Date of filing: 02.02.2007
(51) Int. Cl.: F16B 5/02

(54) **Tolerance compensating mounting device**
Montagevorrichtung mit Toleranzausgleich
Dispositif de montage compensant les tolérances

(30) Priority: 06.03.2006 US 367697
(43) Date of publication of application: 12.09.2007
(73) Proprietor: Nissan Motor Co., Ltd., Kanagawa 221-0023 (JP)
(72) Inventor: Lorenzo, Randy, Michigan (US)
(74) Representative: Weber, Joachim

(56) References cited:
- DE-A1- 10 315 690
- US-A- 5 492 388
- US-B2- 6 884 014

## Description

### BACKGROUND OF THE INVENTION

### Field of the Invention

The present invention generally relates to a tolerance compensating mounting device for mounting a vehicle component to a vehicle body while compensating for a tolerance clearance formed between the vehicle component and the vehicle body.

### Background Information

Many interior vehicle components of conventional motor vehicles are coupled together and/or to the vehicle body by threaded fasteners. It is desirable from an aesthetics stand point to have the interior vehicle components fit together without any gaps. However, from a manufacturing stand point, it can be very costly to produce interior vehicle components that fit together without any gaps. Thus, tolerance compensating mounting devices have been developed to adjust the gaps between interior vehicle components and/or the vehicle body. One example of a conventional tolerance compensating mounting device is disclosed in U.S. Patent No. 6,884,014. This patent discloses a conventional tolerance compensating mounting device that is used to connect first and second components while simultaneously compensating for a tolerance clearance formed between the first and second components. The conventional tolerance compensating mounting device disclosed in this patent includes a threaded bushing having internal and external threaded portions. The threaded bushing is configured and arranged to completely span a tolerance gap formed between the first and second components while the first and second components are fixedly coupled by a bolt.

More specifically, the external threaded portion of the threaded bushing in the conventional tolerance compensating mounting device is threaded into a threaded bore formed in the first component as the threaded bushing is rotated by a tool or a hand engaged with a hexagonal flange portion formed at an axial end of the threaded bushing. The bolt is then threaded into the internal threaded portion of the threaded bushing. The rotating movement of the bolt causes the threaded bushing to rotate with respect to the threaded bore of the first component, thereby causing the bushing to be unscrewed from the first component toward the second component. The threaded bushing continues to rotate until the flange portion of the threaded bushing abuts against a mounting surface of the second component. At this point, the threaded bushing completely spans the tolerance gap between the first and second components, and thus, compensates for the tolerance gap. The bolt is then further rotated with respect to the threaded bushing so that the first and second components are fixedly coupled by fastening the bolt.

Such conventional tolerance compensating mounting device is often used in vehicle assembly. For example, in a vehicle cockpit module, an instrument panel is mounted to a vehicle body by using a plurality of conventional tolerance compensating mounting devices at a plurality of mounting positions. The bolts are inserted from an outer side of the vehicle body and engage with the threaded bushings expanding between the vehicle body and the instrument panel.

When the vehicle body or the instrument panel is removed or repositioned after the vehicle body and the instrument panel are assembled together, the bolts are first unscrewed and removed from the threaded bushings of the conventional tolerance compensating mounting devices. However, when the bolt is unscrewed from the internal threaded portion of the threaded bushing, the rotational movement of the bolt does not cause the threaded bushing to rotate because of a large torque exerted between the threaded bushing and the vehicle body. Therefore, after the bolt is removed, the threaded bushing remains expanding between the instrument panel and the vehicle body. Thus, in order to rotate the threaded bushing to cause the threaded bushing to retract toward the instrument panel, the threaded bushing needs to be rotated by engaging a tool with the flange portion of the threaded bushing. However, since the flange portion of the threaded bushing is disposed between the vehicle body and the instrument panel with the flange portion abutting against the mounting surface of the vehicle body, the tool needs to be inserted between the vehicle body and the instrument panel to engage with the flange portion. Thus, when the vehicle body and the instrument panel are coupled by the conventional tolerance compensating mounting devices, access to the flange portions of the threaded bushings between the vehicle body and the instrument panel is required in order to retract the threaded bushings for removing or repositioning the vehicle body and the instrument panel.

However, this required access geometry between the vehicle body and the instrument panel is rarely satisfied because of the complex shape of the cockpit module. Therefore, the required access geometry must be considered during the initial design phases so that a tool can be inserted between the vehicle body and the instrument panel to access the flange portions of the threaded bushings of the conventional tolerance compensating mounting devices. Unfortunately, this structural requirement adds additional constraints to the design of the cockpit module, e.g., possibility of a smaller glove-box, or unsightly parting lines, etc.

In view of the above, it will be apparent to those skilled in the art from this disclosure that there exists a need for an improved tolerance compensating mounting device. This invention addresses this need in the art as well as other needs, which will become apparent to those skilled in the art from this disclosure.

DE 103 15 690 A1 discloses a device according to the preamble of claim 1.

### SUMMARY OF THE INVENTION

One object of the present invention is to provide a tolerance compensating mounting structure that enables retracting of a tolerance compensating mounting device disposed between two components without accessing the tolerance compensating mounting device from a space between the components, thereby reducing design constraints on the components.
The object is solved by the features of claim 1. The dependent claims contain advantageous embodiment of present invention.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:

Figure 1 is a side elevational view of a vehicle utilizing a plurality of tolerance compensating mounting devices to fixedly couple an instrument panel with a vehicle body in accordance with a preferred embodiment of the present invention ;

Figure 2 is a partial rear perspective view of a front portion of a passenger compartment of the vehicle on a passenger seat side illustrating the vehicle body coupled to the instrument panel using the tolerance compensating mounting devices in accordance with the preferred embodiment of the present invention;

Figure 3 is a partial rear perspective view of the front portion of the passenger compartment illustrated in Figure 2 in a state in which the vehicle body has been removed and in which tubular members and outer members of the tolerance compensating mounting devices are attached to the instrument panel in accordance with the preferred embodiment of the present invention;

Figure 4 is an exploded perspective view of the outer member, the tubular member and a threaded fastener of the tolerance compensating mounting device for fixedly mounting the vehicle body to the instrument panel in accordance with the preferred embodiment of the present invention;

Figure 5 is an exploded cross sectional view of the vehicle body, the instrument panel and the tolerance compensating mounting device including the outer member, the tubular member and the threaded fastener in accordance with the preferred embodiment of the present invention;

Figure 6 is a cross sectional view of the outer member, the tubular member and the threaded fastener of the tolerance compensating mounting device in an installed state after the tolerance compensating mounting device, the instrument panel and the vehicle body are assembled together in accordance with the preferred embodiment of the present invention;

Figure 7 is a partial side elevational view of the vehicle body illustrating a portion where the tolerance compensating mounting device is coupled thereto in accordance with the preferred embodiment of the present invention;

Figure 8 is a partial side elevational view of the vehicle body illustrating a portion where the tolerance compensating mounting device is coupled thereto wherein the threaded fastener of the tolerance compensating mounting device has been removed;

Figure 9 is a cross sectional view of the outer member and the tubular member of the tolerance compensating mounting device coupled between the vehicle body and the instrument panel illustrating a partially disassembled state in which a rotatable tool is engaged with a tool engaging structure of the tubular member in accordance with the preferred embodiment of the present invention;

Figures 10a-10e are a series of top plan views of the tubular member illustrating alternative arrangements of the tool engaging structure of the tubular member in accordance with the present invention; and

Figure 11 is a cross sectional view of an outer member, a tubular member and a threaded fastener of a modified tolerance compensating mounting device for fixedly coupling first and second components as an example not in accordance with the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

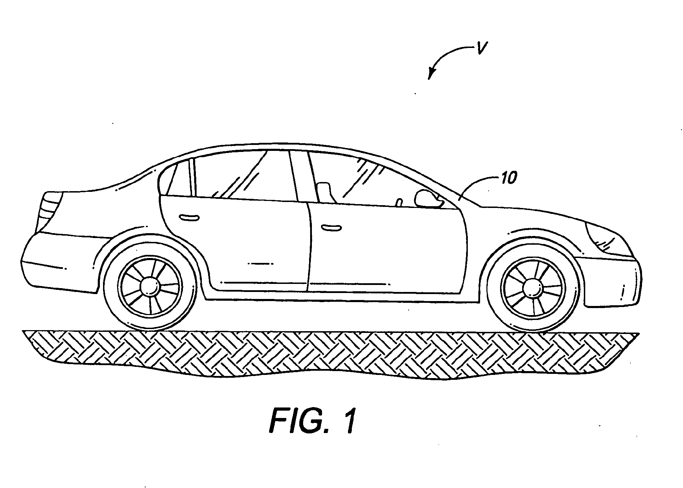

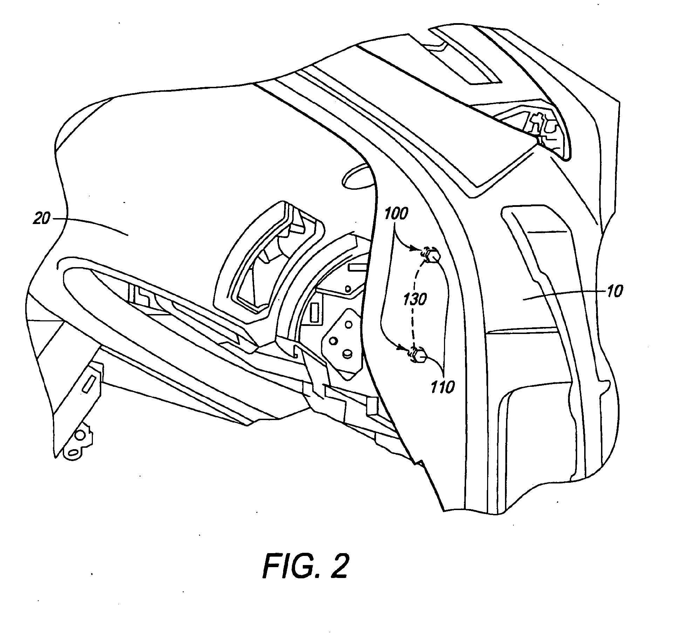

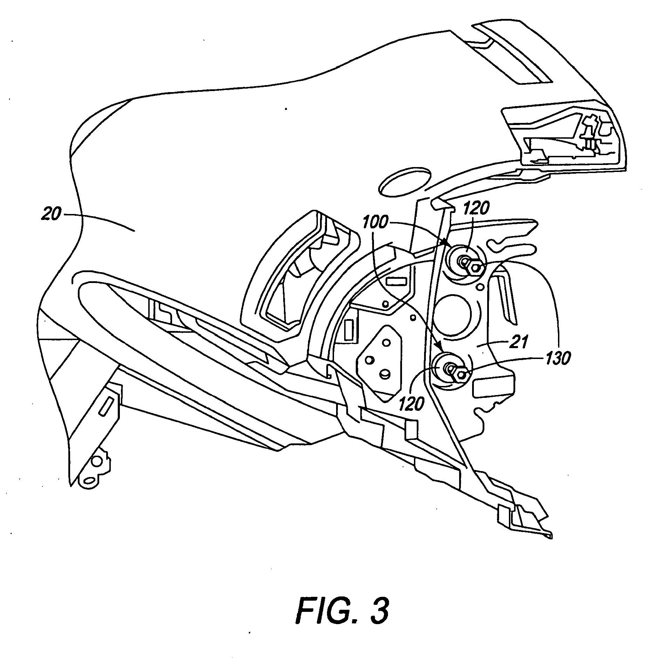

Figure 1 is a side elevational view of a vehicle V including a vehicle body 10. Figure 2 is a rear perspective view of a front portion of a passenger compartment on a passenger seat side of the vehicle V illustrating the vehicle body 10 coupled to an instrument panel 20. Figure 3 is a rear perspective view of the instrument panel 20 illustrating an installed state before the vehicle body 10 is mounted thereto. As seen in Figure 2, in a cockpit module of the vehicle V, the instrument panel 20 is fixedly mounted to the vehicle body 10 by a plurality of tolerance compensating mounting devices 100 (only two tolerance compensating mounting devices 100 are shown in Figure 2) in accordance with the preferred embodiment of the present invention. Each of the tolerance compensating mounting devices 100 is configured and arranged to fixedly fasten the instrument panel 20 to the vehicle body 10 while simultaneously compensating for a tolerance clearance formed between the vehicle body 10 and the instrument panel 20.

As seen in Figure 3, the instrument panel 20 includes a mounting section 21 to which the vehicle body 10 is mounted by the tolerance compensating mounting devices 100. In the illustrated embodiment, the mounting section 21 of the instrument panel is arranged to extend in a front to aft direction of the vehicle V. However, it will be apparent to those skilled in the art from this disclosure that the direction or orientation of mounting portions of the vehicle body 10 and the mounting section 21 of the instrument panel 20 are not essential features of the present invention. In other words, the tolerance compensating mounting devices 100 of the present invention can be utilized to fixedly couple the vehicle body 10 and the instrument panel 20 in any orientation depending on structure and design of the vehicle body 10 and the instrument panel 20. Moreover, in the illustrated embodiment of the present invention, the vehicle body 10 and the instrument panel 20 are used as examples of vehicle components that are fixedly coupled by the tolerance compensating mounting devices 100 of the present invention. However, it will be apparent to those skilled in the art from this disclosure that the tolerance compensating mounting devices 100 can be used to fixedly couple any vehicle components other than the vehicle body 10 and the vehicle instrument panel 20 where it is required to compensate for a tolerance gap between the vehicle components to be joined.

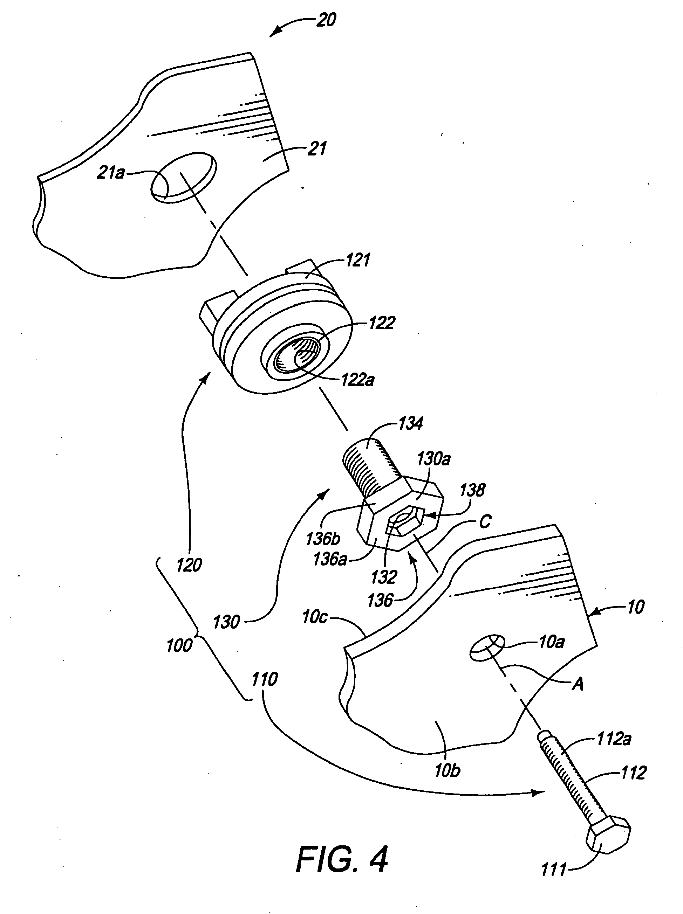

Referring now to Figures 4 to 8, the tolerance compensating mounting device 100 in accordance with the preferred embodiment of the present invention will be explained in more detail.

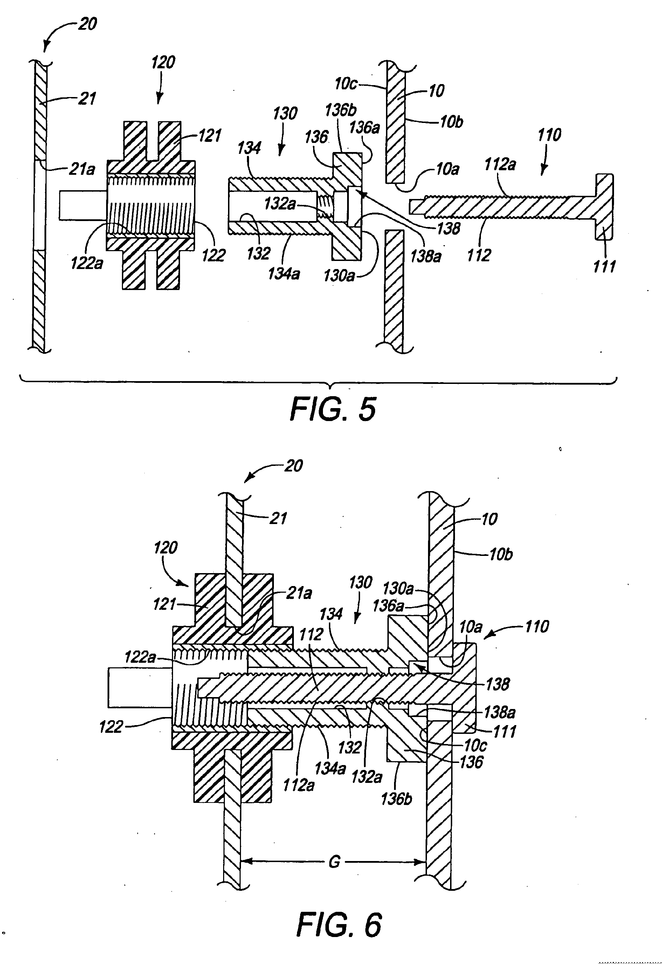

Figure 4 is an exploded perspective view of the tolerance compensating mounting device 100, the vehicle body 10, and the mounting section 21 of the instrument panel 20. Figure 5 is an exploded cross sectional view of the vehicle body 10, the instrument panel 20 and the tolerance compensating mounting device 100. Figure 6 is a cross sectional view of the vehicle body 10, the instrument panel 20 and the tolerance compensating mounting device 100 in an installed state after the tolerance compensating mounting device 100, the instrument panel 20 and the vehicle body 10 are assembled. As seen in Figures 4-6, the tolerance compensating mounting device 100 comprises a threaded fastener 110, an outer member 120 and a tubular member 130.

The threaded fastener 110 is preferably a conventional bolt that includes a head section 111 and a shaft section 112. The shaft section 112 of the threaded fastener 110 has an external surface including a threaded portion 112a that is provided with male threads. The head section 111 and the shaft section 112 of the threaded fastener 110 are configured and arranged so that the shaft section 112 is inserted through an attachment aperture 10a formed in the vehicle body 10 along a fastener insertion center axis A as seen in Figure 4 and the head section 111 is seated on an outer side surface 10b of an outer peripheral area around the attachment aperture 10a as seen in Figure 6.

The outer member 120 preferably includes an outer collar section 121 and an inner cylindrical section 122 that is disposed inside the outer collar section 121 and fixedly coupled to the outer collar section 121. The outer collar section 121 is preferably made of a resilient material such as systemic resin or the like, and configured and arranged to be fixedly mounted to a mounting hole 21a formed on a mounting section 21 of the instrument panel 20 by snap-fitting or the like. An internal surface of the inner cylindrical section 122 includes a threaded portion 122a that is provided with female threads thereby forming a threaded mounting bore. Although in the illustrated embodiment the outer member 120 is formed as a separate member from the instrument panel 20 that is fixedly coupled to the mounting hole 21a, the outer member 120 including the threaded portion 122a can also be integrally formed with the instrument panel 20 as a one-piece, unitary member.

The tubular member 130 includes an internal surface 132 and an external surface 134. The internal surface 132 of the tubular member 130 defines a fastener insertion hole that extends through the entire length of the tubular member 130 along a center axis C of the tubular member 130. The tubular member 130 has an annular flange section 136 extending radially outwardly at a first axial end portion of the tubular member 130 and a tool engaging structure 138 formed on an axial end surface 130a of the tubular member at the first axial end portion of the tubular member 130. In this embodiment, the tubular member 130 is oriented with respect to the vehicle body 10 and the instrument panel 20 so that the first axial end portion of the tubular member 130 is disposed toward the vehicle body 10 so that the threaded fastener 110 is inserted into the tubular member 130 at the first axial end portion as seen in Figure 5.

As seen in Figures 5 and 6, the internal surface 132 of the tubular member 130 includes a circular liner portion with an internal threaded portion 132a formed thereon. The internal threaded portion 132a is provided with female threads configured and arranged to threadably engage with the male threads of the threaded portion 112a of the threaded fastener 110. The external surface 134 of the tubular member 130 includes an external threaded portion 134a that is provided with male threads. The external threaded portion 134a is configured and arranged to threadably engage with the female threads of the threaded portion 122a of the outer member 120. It will be apparent to those skilled in the art from this disclosure that precise arrangements of the internal threaded portion 132a and the external threaded portion 134a (e.g., positions, number of thread pitches, and the like) are varied depending on various considerations including an amount of fastening torque required for the tolerance compensating mounting device 100.

In the tolerance compensating mounting device 100 in accordance with the preferred embodiment illustrated in Figures 4-6, the internal threaded portion 132a have opposite hand threads with respect to the external threaded portion 134a. For example, when the female threads of the internal threaded portion 132a and the male threads of the threaded portion 112a of the threaded fastener 110 are arranged as right-hand threads, then, the male threads of the external threaded portion 134a and the female threads of the threaded portion 122a of the outer member 120 are arranged as left-hand threads.

Moreover, the external threaded portion 134a and the internal threaded portion 132a of the tubular member 130 are configured and arranged such that a torque required to screw the threaded portion 112a of the threaded fastener 110 into the internal threaded portion 132a is greater than a torque required to unscrew the external threaded portion 134a from the threaded portion 122a of the outer member 120. In other words, the external threaded portion 134a and the internal threaded portion 132a are configured and arranged so that the tubular member 130 is temporarily rotated in synchronization with the threaded fastener 110 in a direction that causes the tubular member 130 to be unscrewed from the outer member 120 before the threaded fastener 110 rotates with respect to the tubular member 130 upon further rotation of the threaded fastener 110.

The annular flange section 136 of the tubular member 130 includes an abutment surface 136a that extends substantially on a same plane as the axial end surface 130a of the tubular member 130. Moreover, the annular flange section 136 of the tubular member 130 preferably has an outer peripheral torque engagement surface 136b that is configured and arranged to engage with a rotatable tool. For example, the torque engagement surface 136b includes six flat surfaces forming a hexagonal shape as shown in Figure 4. Therefore, a wrench or the like engages the torque engagement surface 136b and rotates the tubular member 130 about a center axis C when the external threaded portion 134a of the tubular member 130 is screwed into the threaded portion 122a of the outer member 120. Of course, it will be apparent to those skilled in the art from this disclosure that a shape of the tool engagement surface 136b is not limited to the hexagonal shape. Rather, the tool engagement surface 136b can be arranged to have any structure as long as such structure allows a tool (including a human hand) to engage with the annular flange section 136 to rotate the tubular member 130 about the center axis C of the tubular member 130.

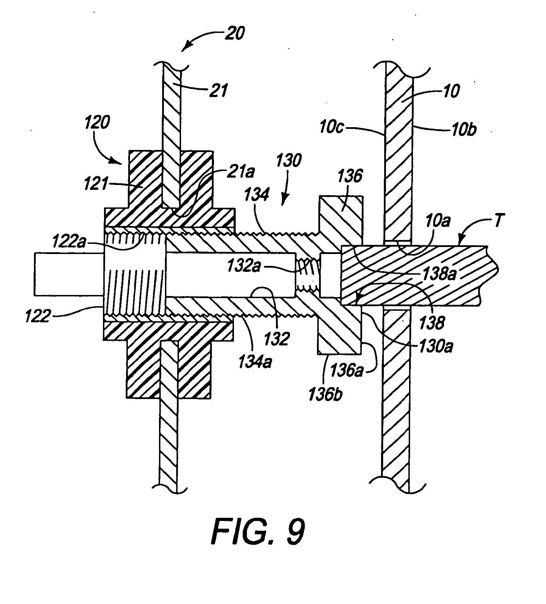

The tool engaging structure 138 of the tubular member 130 is formed on the axial end surface 130a of the tubular member 130 at a position radially spaced between the external surface 134 and the internal surface 132 of the tubular member 130. In this embodiment of the present invention, the tool engaging structure 138 of the tubular member 130 includes a recess section with a tool abutment side surface 138a extending substantially symmetrically about the center axis C of the tubular member 130. More specifically, as shown in Figure 4, the recess section of the tool engaging structure 138 forms a concentric counterbore to the fastener insertion hole defined by the internal surface 132 of the tubular member 130. The tool engaging structure 138 of the tubular member 130 is configured and arranged such that a rotatable tool T (Figure 9) inserted through the attachment aperture 10a of the vehicle body 10 engages with the tool abutment side surface 138a of the tool engaging structure 138. In this preferred embodiment, the tool abutment side surface 138a has a hexagonal outline in a plane perpendicular to the center axis C of the tubular member 130. Therefore, the rotatable tool T is configured and arranged to engage with six flat sections of the hexagonal tool abutment side surface 138a (e.g., an Allen wrench).

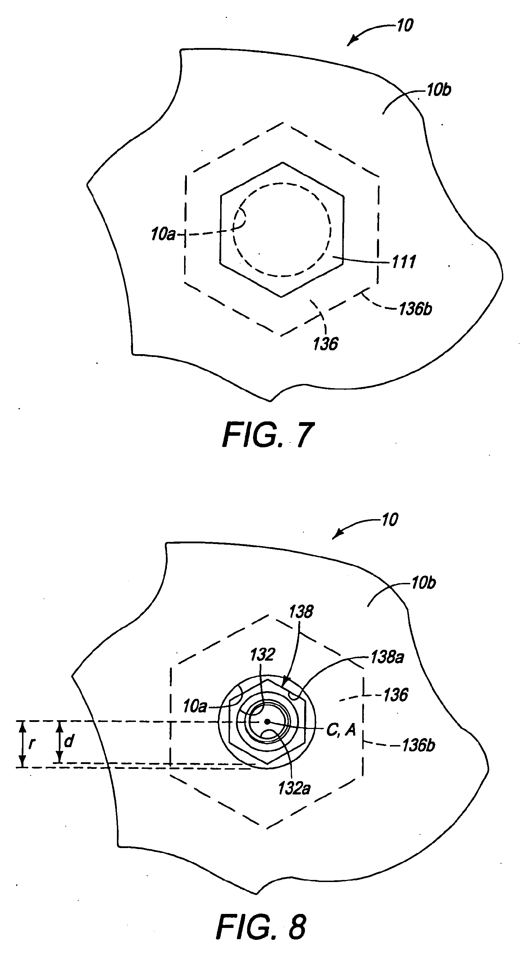

Referring now to Figures 7 and 8, dimensional relationships among the tool engaging structure 138 of the tubular member 130, the attachment aperture 10a of the vehicle body 10 and the head section 111 of the threaded fastener 110 will be explained in more detail in accordance with the preferred embodiment of the present invention. Figure 7 is a partial side elevational view of the vehicle body 10 illustrating a portion where the tolerance compensating mounting device 100 is coupled thereto. Figure 8 is a partial side elevational view of the vehicle body 10 illustrating a portion where the tolerance compensating mounting device 100 is coupled thereto and wherein the threaded fastener 110 of the tolerance compensating mounting device 100 has been removed.

As seen in Figure 7, when the threaded fastener 110 is installed, the head section 111 of the threaded fastener 110 is seated on the outer side surface 10b in the peripheral area around the attachment aperture 10a of the vehicle body 10. As shown in Figure 8, the tool engaging structure 138 of the tubular member 130 is dimensioned with respect to the attachment aperture 10a of the vehicle body 10 so that a maximum distance d between the center axis C of the tubular member 130 and the tool abutment side surface 138a in a plane perpendicular to the center axis C of the tubular member 130 is smaller than a minimum distance r between the fastener insertion center axis A and the attachment aperture 10a of the vehicle body 10 (i.e., a radius of the attachment aperture 10a in the illustrated embodiment). In other words, the tool engaging structure 138 is configured and arranged to be accessible by the rotatable tool T (Figure 9) through the attachment aperture 10a from the outer side surface 10b of the vehicle body 10. It will be apparent to those skilled in the art from this disclosure that a precise dimension of the tool engaging structure 138 is varied depending on size of the tubular member 130, size of the attachment aperture 10a of the vehicle body 10, and other structural considerations. Moreover, although the attachment aperture 10a of the vehicle body 10 in the illustrated embodiment is formed in a substantially circular shape as seen in Figure 8, the attachment aperture 10a can also be formed in a non-circular shape. In such case too, the tool engaging structure 138 of the tubular member 130 is arranged so that a maximum distance between the center axis C of the tubular member 130 and the tool abutment side surface 138a in a plane perpendicular to the center axis C of the tubular member 130 is smaller than a minimum distance between the fastener insertion center axis A of the attachment aperture 10a and a surface defining the attachment aperture 10a of the vehicle body 10.

Next, the assembly process between the instrument panel 20 and the vehicle body 10 using the tolerance compensating mounting device 100 will be explained in more detail. First, the outer member 120 of the tolerance compensating mounting device 100 is fixedly attached to the mounting hole 21 a formed in the mounting section 21 of the instrument panel 20. Then, the external threaded portion 134a of the tubular member 130 is screwed into the threaded portion 122a of the outer member 120 as the tubular member 130 is rotated by the tool engaged with the torque engagement surface 136b of the annular flange section 136. Figure 3 illustrates an installed state in which the outer members 120 and the tubular members 130 of the tolerance compensating mounting devices 100 are coupled to the mounting section 21 of the instrument panel 20.

Then, the instrument panel 20 is positioned with respect to the vehicle body 10 so that the attachment aperture 10a of the vehicle body 10 is aligned with the fastener insertion hole defined by the internal surface 132 of the tubular member 130. Next, the threaded fastener 110 is inserted into the fastener insertion hole of the tubular member 130 through the attachment aperture 10a of the vehicle body 10 from the outer side surface 10b of the vehicle body 10. Then, the threaded fastener 110 is rotated in a direction that causes the threaded portion 112a of the threaded fastener 110 to be screwed into the internal threaded portion 132a of the tubular member 130. As the threaded fastener 110 is rotated, the threaded portion 112a of the threaded fastener 110 engages the internal threaded portion 132a of the tubular member 130. However, as mentioned above, a torque required to screw the threaded portion 112a of the threaded fastener 110 into the internal threaded portion 132a of the tubular member 130 is larger than a torque required to unscrew the external threaded portion 134a of the tubular member 130 from the threaded portion 122a of the outer member 120. Thus, the tubular member 130 is initially rotated in synchronization with the threaded fastener 110 by rotation of the threaded fastener 110. As mentioned above, the threaded portion 112a of the threaded fastener 110 and the internal threaded portion 132a of the tubular member 130 include opposite hand threads from the external threaded portion 134a of the tubular member 130 and the threaded portion 122a of the outer member 120. Therefore, rotation of the threaded fastener 110 in a direction that causes the threaded fastener 110 to be screwed into the tubular member 130 causes rotation of the tubular member 130 with respect to the outer member 120 in a direction that causes the tubular member 130 to be unscrewed from the outer member 120. Accordingly, as the threaded fastener 110 rotates, the tubular member 130 begins to rotate and to extend away from the outer member 120 toward the vehicle body 10 as the external threaded portion 134a of the tubular member 130 is unscrewed from the threaded portion 122a of the outer member 120.

The tubular member 130 continues to extend away from the outer member 120 until the abutment surface 136a of the annular flange section 136 reaches an inner side surface 10c of the vehicle body 10. The tubular member 130 continues to rotate until the annular flange section 136 exerts a force on the vehicle body 10 that is equal to or more than an amount of torque required to screw the threaded portion 112a of the threaded fastener 110 into the internal threaded portion 132a of the tubular member 130. At this point, the threaded fastener 110 starts rotating with respect to the tubular member 130 thereby, threadably engaging the threaded portion 112a of the threaded fastener 110 with the internal threaded portion 132a of the tubular member 130. As a result, the vehicle body 10 is fastened to the instrument panel 20 by the tolerance compensating mounting device 100 while the tubular member 130 compensates for a tolerance gap G between the vehicle body 10 and the instrument panel 20 as shown in Figure 5. Figure 2 illustrates a installed state in which the instrument panel 20 is fixedly coupled the vehicle body 10 by the threaded fasteners 110 of the tolerance compensating mounting devices 100.

The force exerted by the annular flange section 136 of the tubular member 130 on the vehicle body 10 when the vehicle body 10 is coupled to the instrument panel 20 can be adjusted by changing the structure of the internal threaded portion 132a of the tubular member 130. For example, the force exerted by the annular flange section 136 of the tubular member 130 can be increased by reducing a diameter of the internal threaded portion 132a (i.e., by increasing the torque required to screw the threaded portion 112a of the threaded fastener 110 into the internal threaded portion 132a of the tubular member 130). As the internal threaded portion 132a is reduced in diameter, more torque is required before the threaded portion 112a of the threaded fastener 110 starts threading into the internal threaded portion 132a of the tubular member 130.

In the above explained embodiment, the internal threaded portion 132a and the external threaded portion 134a of the tubular member 130 are configured and arranged such that the tubular member 130 initially rotates in synchronization with the threaded fastener 110 before the threaded fastener 110 starts rotating with respect to the tubular member 130 by setting the torque required to screw the threaded fastener 110 into the tubular member 130 higher than the torque required to unscrew the tubular member 130 from the outer member 120. However, the present invention is not limited to such arrangement. For example, other methods can be used in the tolerance compensating mounting device 100 of the present invention, such as using adhesives that allow the tubular member 130 to initially rotate in synchronization with the threaded fastener 110 before the threaded fastener 110 starts rotating with respect to the tubular member 130.

When the instrument panel 20 needs to be removed or repositioned with respect to the vehicle body 10, the threaded fastener 110 is first unscrewed from the tubular member 130. However, since a large torque is applied to the vehicle body 10 by the tubular member 130 once the vehicle body 10 and the instrument panel 20 are assembled by the tolerance compensating mounting devices 100, the tubular member 130 does not retract toward the outer member 120 when the threaded fastener 110 is unscrewed. In other words, the force applied to the tubular member 130 and the vehicle body 10 creates a large friction force, and thus, the force created by the removal of the threaded fastener 110 does not exert enough force to cause the tubular member 130 to start rotating in a direction that causes the tubular member 130 to be screwed into the outer member 120 (i.e., in a direction that causes the tubular member 130 to retract toward the outer member 120). Therefore, when the threaded fastener 110 is unscrewed from the tubular member 130, the abutment surface 136a of the annular flange section 136 of the tubular member 130 remains contacting against the inner side surface 10b of the vehicle body 10.

Therefore, when the tubular member 130 needs to be retracted toward the outer member 120 for removing or repositioning the instrument panel 20 with respect to the vehicle body 10, the rotatable tool T is inserted through the attachment aperture 10a from the outer side surface 10b of the vehicle body 10 so that the rotatable tool T engages with the tool engaging structure 138 of the tubular member 130 as shown in Figure 9. Then, the rotatable tool T is operated to rotate the tubular member 130 in a direction that causes the external threaded portion 134a of the tubular member 130 to be screwed into the threaded portion 122a of the outer member 120. Therefore, the tubular member 130 is retracted toward the outer member 120 as seen in Figure 9. Then, the instrument panel 20 can be removed or repositioned with respect to the vehicle body 10.

As mentioned above, the tool engaging structure 138 is formed on the axial end surface 130a of the tubular member 130 that is disposed adjacent to the vehicle body 10 and the tool engaging structure 138 is formed to be accessible by the rotatable tool T through the attachment aperture 10a from the outer side surface 10b of the vehicle body 10. Therefore, there is no need to access to the torque engagement surface 136b of the annular flange section 136 from a space between the vehicle body 10 and the instrument panel 20 in order to rotate the tubular member 130 to be retracted toward the outer member 120. In other words, the tool engaging structure 138 of the tubular member 130 allows the tubular member 130 to be retracted from the outer side of the vehicle body 10 without accessing the underside of the assembly (i.e., underside of the vehicle body 10). With the tolerance compensating mounting device 100 of the present invention, operations including installation of the vehicle body 10 to the instrument panel 20 using the threaded fastener 110 and removal of the vehicle body 10 with respect to the instrument panel 20 by retracting the tubular member 130 can be performed on the same side of the assembly (e.g., on the outer side of the vehicle body 10). Accordingly, with the tolerance compensating mounting device 100, design freedom of the vehicle body 10, the instrument panel 20 and other components of the cockpit module can be improved as compared to the conventional tolerance compensating mounting device because it is not required to provide a space for a tool to access to the annular flange section 136 of the tubular member 130 between the vehicle body 10 and the instrument panel 20.

In the embodiment explained above, the tool abutment side surface 138a of the tool engaging structure 138 has the hexagonal outline in the plane perpendicular to the center axis C of the tubular member 130 as seen in Figure 6. However, the tool engaging structure 138 of the present invention is not limited to the hexagonal shape. Rather, any structure with which a rotatable tool can engage to exert a torque to rotate the tubular member 130 in a direction for retracting the tubular member 130 toward the outer member 120 can be used as the tool engaging structure 138 of the present invention.

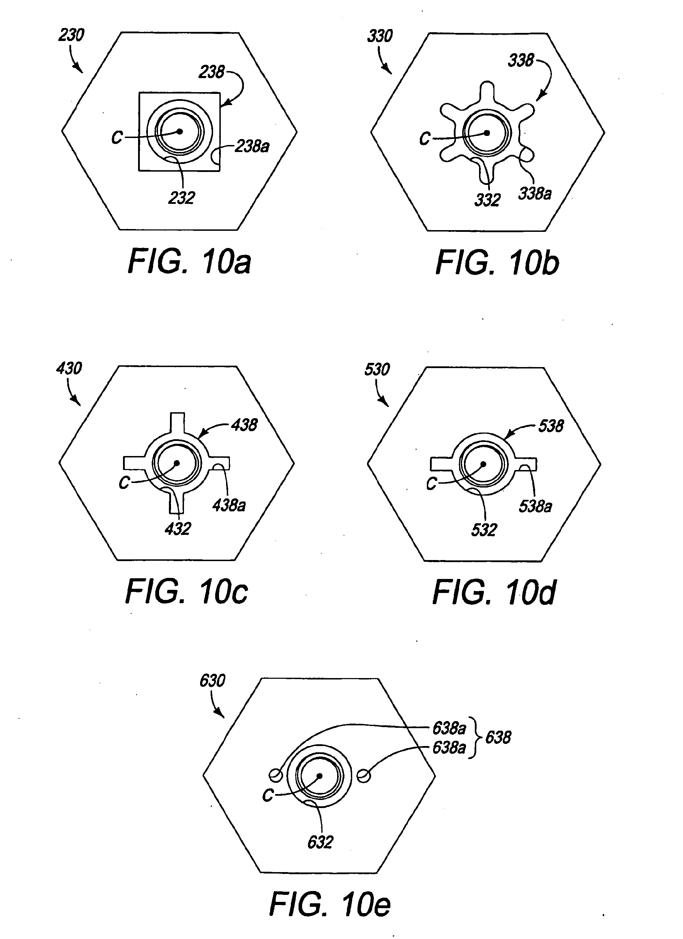

For example, Figures 10a-10e are top plan views of several tubular members 230-630 illustrating examples of several different shapes of tool engaging structures 238-638 that can be used in the tolerance compensating mounting device 100 of the present invention. The structures of the tubular members 230-630 are basically identical to the structure of the tubular member 130 explained above, except for the arrangements of the tool engaging structures 238-638.

Figure 10a shows the tool engaging structure 238 with a tool abutment side surface 238a having a square shaped outline in the plane perpendicular to the center axis C of the tubular member 230. The tool abutment side surface 238a defines a concentric counterbore to a fastener insertion hole defined by an internal surface 232 of the tubular member 230. It will be apparent to those skilled in the art from this disclosure that any suitable polygonal shape may be used as the tool engaging structure of the present invention.

Figure 10b shows the tool engaging structure 338 with a tool abutment side surface 338a having a generally star-shaped outline (e.g., torx head) in the plane perpendicular to the center axis C of the tubular member 330. In this case, the tool abutment side surface 338a continuously extends from an internal surface 332 of the tubular member 330 radially outwardly as seen in Figure 10b.

Figure 10c shows the tool engaging structure 438 with a tool abutment side surface 438a having a cross-shaped outline (e.g., phillips head) in the plane perpendicular to the center axis C of the tubular member 430. In this case, the tool abutment side surface 438a continuously extends from an internal surface 432 of the tubular member 430 radially outwardly as seen in Figure 10c.

Figure 10d shows the tool engaging structure 538 with a tool abutment side surface 538a having a generally slit shaped outline in the plane perpendicular to the center axis C of the tubular member 530. In this case, the tool abutment side surface 538a continuously extends from an internal surface 532 of the tubular member 530 radially outwardly as seen in Figure 10d.

Figure 10e shows the tool engaging structure 638 including a pair of tool abutment holes 638a (e.g., spanner head) disposed symmetrically with respect to the center axis C of the tubular member 630. It will be apparent to those skilled in the art from this disclosure that the number of the tool abutment holes 638a is not limited to two as illustrated in Figure 10e, and more than two tool abutment holes 638a can be provided to carry out the present invention.

In each case illustrated in Figures 10a-10e, a rotatable tool having a suitable shape is used to engage with each of the tool engaging structures 238-638 depending on the shape of each of the tool engaging structures 238-638.

### MODIFIED TOLERANCE COMPENSATING MOUNTING DEVICE

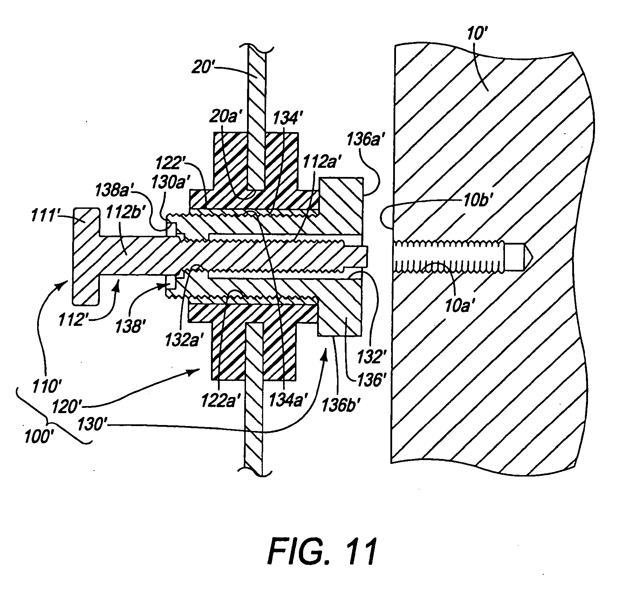

Referring now to Figure 11, a modified tolerance compensating mounting device 100' not in accordance with the invention adapted to fixedly couple a first component 10' and a second component 20' will be explained. The modified tolerance compensating mounting device 100' differs from the tolerance compensating mounting device 100 explained above in that a threaded fastener 110' is configured and arranged to be first screwed into a tubular member 130' that is coupled to the second component 20' through an outer member 120', and further to be screwed into a threaded bore 10a' formed on the first component 10', thereby fastening the second component 20' to the first component 10'.

As seen in Figure 11, the threaded fastener 110' of the modified tolerance compensating mounting device 100' has a head section 111' and a shaft section 112'. The shaft section 112' includes a threaded portion 112a' provided with male threads and a larger diameter portion 112b' having a diameter that is larger than a diameter of the threaded portion 112a'.

The outer member 120' of the modified tolerance compensating mounting device 100' is basically identical to the outer member 120 of the tolerance compensating mounting device 100 explained above. More specifically, the outer member 120' includes an outer collar section 121' and an inner cylindrical section 122' with a threaded portion 122a' formed on an internal peripheral surface thereof. The outer member 120' is fixedly coupled to a mounting bore 20a' formed on the second component 20' by snap-fitting or the like as shown in Figure 11. Although the outer member 120' is illustrated as a separate member from the second component 20' in Figure 11, the outer member 120' can be integrally formed with the second component 20' as a one-piece, unitary member.

The tubular member 130' of the modified tolerance compensating mounting device 100' has an internal surface 132' and an external surface 134'. The internal surface 132' is provided with a circular liner forming an internal threaded portion 132a' having female threads. The external surface 134' includes an external threaded portion 134a' having male threads. A tool engaging structure 138' is provided on an axial end surface 130a' at a first axial end portion of the tubular member 130' from which the threaded fastener 110' is inserted into a fastener insertion hole defined by the internal surface 132' of the tubular member 130'. The tool engaging structure 138' is basically identical to the tool engaging structure 138 of the tubular member 130 explained above. In other words, the tool engaging structure 138' includes a tool abutment side surface 138a' that forms a hexagonal outline in a plane perpendicular to a center axis of the tubular member 130'. The tubular member 130' further includes an annular flange section 136' extending radially outwardly at a second axial end portion that is opposite from the first axial end portion where the tool engaging structure 138' is formed as shown in Figure 11. The annular flange section 136' includes an abutment surface 136a' that is configured and arranged to contact against a mounting surface 10b' of the first component 10'. The annular flange section 136' preferably includes a torque engagement surface 136b' formed on an outer peripheral surface thereof.

In the modified tolerance compensating mounting device 100', the female threads of the internal threaded portion 132a' and the male threads of the external threaded portion 134a' are arranged to be the same hand threads. Moreover, the internal threaded portion 132a' and the external threaded portion 134a' are configured and arranged such that a torque required to screw the threaded fastener 110' in the internal threaded portion 132a' of the tubular member 130' is smaller than a torque required to unscrew the external threaded portion 134a' of the tubular member 130' from the threaded portion 122a' of the outer member 120'. Furthermore, the internal threaded portion 132a' is configured and arranged such that the tubular member 130' is temporarily rotated in synchronization with rotation of the threaded fastener 110'. For example, in the embodiment illustrated in Figure 11, the internal threaded portion 132a' of the tubular member 130' has a smaller diameter than the diameter of the larger diameter portion 112b' of the threaded fastener 110 so that an interference fit between the internal threaded portion 132a' and the larger diameter portion 112b' is achieved when the threaded portion 112a' of the threaded fastener 110' is fully screwed into the internal threaded portion 132a' of the tubular member 130'. In other words, the female threads of the internal threaded portion 132a' of the tubular member 130' are formed as sacrificial threads that are configured and arranged to partially deform or strip by engaging with the larger diameter portion 112b' of the threaded fastener 110'. Of course, it will be apparent to those skilled in the art from this disclosure that other arrangement, such as using adhesives and the like, can be used instead of providing the larger diameter portion 112b' in the threaded fastener 110' to allow the tubular member 130' to temporarily rotate in synchronization with the threaded fastener 110'.

Next, the operation of the modified tolerance compensating mounting device 100' when the first component 10' and the second component 20' are coupled together will be explained in more detail. The tubular member 130' is first threaded into the outer member 120' mounted to the second component 20' so that the annular flange section 136' is disposed on one side of the second component 20' that faces the first component 10' as seen in Figure 11. Then, the threaded fastener 110' is inserted from the first axial end portion of the tubular member 130' and threaded into the internal threaded portion 132a' of the tubular member 130' until the larger diameter portion 112b' engages with the internal threaded portion 132a'. Once the interference fit between the larger diameter portion 112b' and the internal threaded portion 132a' is achieved, the tubular member 130' starts rotating in synchronization with rotation of the threaded fastener 110' in a direction that causes the external threaded portion 134a' of the tubular member 130' to be unscrewed from the threaded portion 122a' of the outer member 120'. The tubular member 130' continues to extend toward a mounting surface 10b' of the first component 10' until the abutment surface 136a' of the annular flange section 136' contacts the mounting surface 10b' of the first component 10'. The threaded fastener 110' is then further rotated with respect to the tubular member 130, which causes the sacrificial threads of the internal threaded portion 132a' to strip or distort by the larger diameter portion 112b' of the threaded fastener 110' as the threaded fastener 110' is fully engaged with the threaded bore 10a' of the first component 10'.

When the first component 10' is removed or repositioned with respect to the second component 20', the threaded fastener 110' is first unscrewed from the threaded bore 10a' of the first component 10' and the internal threaded portion 132a' of the tubular member 130'. Since the annular flange section 136' of the tubular member 130' exerts large torque on the mounting surface 10b' of the first component 10', rotation of the threaded fastener 110' does not cause the tubular member 130 to retract toward the outer member 120'. Thus, the tubular member 130' remains in a position in which the annular flange section 136' contacts the mounting surface 10b' of the first component 10'. In the modified tolerance compensating mounting device 100', the tool engaging structure 138' of the tubular member 130' is accessible from an outer side of the second component 20' as seen in Figure 11. Therefore, a rotatable tool such as an Allen wrench can be inserted from the outer side of the second component 20' to engage with the tool abutment side surface 138a' of the tool engaging structure 138' and rotates the tubular member 130' in a direction that causes the tubular member 130' to retract toward the outer member 120' (i.e., in a direction that causes the external threaded portion 134a' to be screwed into the threaded portion 122a' of the outer member 120'). Then, the first component 10' can be removed or repositioned with respect to the second component 20'.

Accordingly, with the modified tolerance compensating mounting device 100', the tubular member 130' can be retracted without accessing the annular flange section 136' disposed between the first component 10' and the second component 20'. Therefore, design freedom with respect to the first component 10' and the second component 20' can be improved as compared to the conventional tolerance compensating mounting device because it is not required to provide a space for a tool to access to the annular flange section 136' of the tubular member 130' between the first component 10' and the second component 20'.

It will be apparent to those skilled in the art from this disclosure that the tool engaging structures 238-638 illustrated in Figures 10a-10e can also be applied to the tool engaging structure 138' of the modified tolerance compensating mounting device 100'.

In the above explained embodiments of the present invention, the threaded fastener 110 or 110', the inner cylindrical section 122 or 122' of the outer member 120 or 120' and the tubular member 130 or 130' are illustrated as being made of metal. However, it will be apparent to those skilled in the art from this disclosure that the parts of the tolerance compensating mounting device 100 or 100' in accordance with the present invention may be made of non-metallic materials such as composite or synthetic resin depending on torque requirements or other considerations.

Moreover, although in the above explained embodiments, the tool engaging structure 138 or 138' is used to rotate the tubular member 130 or 130' to be retracted toward the outer member 120 or 120'. However, it will be apparent to those skilled in the art from this disclosure that the tool engaging structure 138 or 138' can also used to rotate the tubular member 130 or 130' when the tubular member 130 or 130' is screwed into the outer member 120 or 120'. In such case, the torque engagement surface 136b or 136b' of the annular flange section 136 or 136' can be eliminated.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the above embodiments, the following directional terms "forward, rearward, above, downward, vertical, horizontal, below and transverse" as well as any other similar directional terms refer to those directions of a vehicle equipped with the present invention. Accordingly, these terms, as utilized to describe the present invention should be interpreted relative to a vehicle equipped with the present invention. The terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time.
Thus, the foregoing descriptions of the embodiments according to the present invention are provided for illustration only, and not for the purpose of limiting the invention as defined by the appended claims and their equivalents. Thus, the scope of the invention is not limited to the disclosed embodiments.

## Claims

1. A vehicle component mounting structure comprising:
a vehicle component (20);
a vehicle body (10) including an attachment aperture (10a) with a fastener insertion center axis;
a tolerance compensating mounting device (100) fixedly coupling the vehicle component (20) to the vehicle body (10), the tolerance compensating mounting device (100) including
a threaded fastener (110) extending through the attachment aperture (10a) of the vehicle body (10) along the fastener insertion center axis, the threaded fastener (110) having a threaded portion (112a),
an outer member (120) disposed between the vehicle body (10) and the vehicle component (20) with the outer member (12) being fixedly coupled to the vehicle component (20), the outer member (120) including a mounting bore having a threaded portion (122a), and
a tubular member (130, 230, 330, 430, 530, 630) extending between the vehicle body (10) and the vehicle component (20) with an internal surface (132) having an internal threaded portion (132a) threadedly engaged with the threaded portion (112a) of the threaded fastener (110) and an external surface (134) having an external threaded portion (134a) threadedly engaged with the threaded portion (122a) of the mounting bore of the outer member (12), the internal threaded portion (132a) having opposite hand threads with respect to the external threaded portion (134a),
the tubular member (130, 230, 330, 430, 530, 630) contacting the vehicle body (10) to compensate for a tolerance gap formed between the vehicle component (20) and the vehicle body (10), and the threaded fastener (110) being adapted to subsequently rotate with respect to the tubular member (130, 230, 330, 430, 530, 630) upon further rotation of the threaded fastener (110) while the tubular member (130, 230, 330, 430, 530, 630) is in contact with the vehicle body (10),
wherein the tubular member (130, 230, 330, 430, 530, 630) including a tool engaging structure (138, 138', 238, 338, 438, 538, 638) formed on an axial end surface of the tubular member (130, 230, 330, 430, 530, 630) disposed adjacent to the vehicle body (10) at a position radially spaced from the external surface (134a) and the internal surface (132a) of the tubular member (130, 230, 330, 430, 530, 630), and
wherein the external threaded portion (134a) of the tubular member (130, 230, 330, 430, 530, 630) and the internal threaded portion (132a) of the tubular member (130, 230, 330, 430, 530, 630) being configured and arranged such that a torque required to rotate the internal threaded portion (132a) with respect to the threaded fastener (110) is greater than a torque required to rotate the external threaded portion (134a) with respect to the mounting bore of the outer member (120), thereby allowing the tubular member (130, 230, 330,430, 530, 630) to rotate in synchronization with rotation of the threaded fastener (110) while the internal threaded portion (132a) of the tubular member (130, 230, 330,430, 530, 630) is threadedly engaged with the threaded portion (112a) of the threaded fastener (110) so that the tubular member (130,230, 330, 430, 530, 630) is adapted to move with respect to the outer member (120) in a direction protruding from the outer member (120),
**characterized in that**
the threaded portion (112a) of the threaded fastener (110) is threadedly engaged with the internal threaded portion (132a) of the tubular member (130, 230, 330, 430, 530, 630) in a complete installed state after the tolerance compensating mounting device (100), the vehicle component (20) and the vehicle body (10) have been assembled, wherein
a maximum distance between a center axis of the tubular member (130, 230, 330, 430, 530, 630) and the tool engaging structure (138, 238, 338, 438, 538, 638) is smaller than a minimum distance between the fastener insertion center axis and the attachment aperture (10a) of the vehicle body (10) in a plane perpendicular to the center axis of the tubular member (130, 230, 330, 430, 530, 630).

2. The vehicle component mounting structure as recited in claim 1,
wherein
the tool engaging structure (138, 238, 338, 438, 538) of the tubular member (130, 230, 330, 430, 530) includes a recess section with a tool abutment side surface (138a, 238a, 338a, 438a, 538a) extending substantially symmetrically about the center axis of the tubular member (130, 230, 330, 430, 530).

3. The vehicle component mounting structure as recited in claim 2,
wherein
the recess section of the tool engaging structure (138, 238, 338, 438, 538,) forms a concentric counterbore to a fastener insertion hole defined by the internal surface (132a) of the tubular member (130, 230, 330, 430, 530).

4. The vehicle component mounting structure as recited in claim 1,
wherein
the tool engaging structure (638) includes a plurality of tool abutment holes (638a) disposed symmetrically with respect to the center axis of the tubular member (630).

5. The vehicle component mounting structure as recited in any one of claims 1 to 4, wherein
the tubular member (130, 230, 330, 430, 530, 630) includes an annular flange section (136) extending radially outwardly at the first axial end portion with respect to the center axis of the tubular member (130, 230, 330, 430, 530, 630).

6. The vehicle component mounting structure as recited in claim 5,
wherein
the annular flange section (136) of the tubular member (130, 230, 330, 430, 530, 630) having an outer peripheral torque engagement surface (136b) with a non-circular shape that is configured and arranged to be engaged by a tool.

7. The vehicle component mounting structure as recited in any one of claims 1 to 6, wherein
the outer member (120) is formed as a separate member from the vehicle component (20), and integrally coupled to the vehicle component (20).

## Patentansprüche

1. Fahrzeugbauteil-Montageanordnung, umfassend:
ein Fahrzeugbauteil (20);
eine Fahrzeugkarosserie (10), die eine Befestigungsöffnung (10a) mit einer Befestigungseinsatzmittelachse umfasst;
eine Toleranzkompensations-Montagevorrichtung (100), die das Fahrzeugbauteil (20) fest mit der Fahrzeugkarosserie (10) verbindet, wobei die Toleranzkompensations-Montagevorrichtung (100) umfasst
eine Befestigungsschraube (110), die sich durch die Befestigungsöffnung (10a) der Fahrzeugkarosserie (10) längs der Befestigungseinsatzmittelachse erstreckt, wobei die Befestigungsschraube (110) einen Gewindebereich (112a) aufweist,
ein äußeres Element (120), das zwischen der Fahrzeugkarosserie (10) und dem Fahrzeugbauteil (20) verbunden ist, wobei das äußere Element (12) mit dem Fahrzeugbauteil (20) fest verbunden ist, wobei das äußere Element (120) eine Montagebohrung mit einem Gewindebereich (122a) umfasst, und
ein röhrenförmiges Element (130, 230, 330, 430, 530, 630), das sich zwischen der Fahrzeugkarosserie (10) und dem Fahrzeugbauteil (20) mit einer Innenfläche (132), die einen Innengewindebereich (132a) aufweist, der mit dem Gewindebereich (112a) der Befestigungsschraube (110) im Gewindeeingriff steht, und eine Außenfläche (134) mit einem Außengewindebereich (134a) aufweist, der mit dem Gewindebereich (122a) der Montagebohrung des äußeren Elements (12) im Gewindeeingriff steht, wobei der Innengewindebereich (132a) in Bezug auf den Außengewindebereich (134a) gegenläufige Gewindegänge aufweist,
das röhrenförmige Element (130, 230, 330, 430, 530, 630) die Fahrzeugkarosserie (10) kontaktiert, um einen Toleranzabstand zu kompensieren, der zwischen dem Fahrzeugbauteil (20) und der Fahrzeugkarosserie (10) ausgebildet ist, und die Befestigungsschraube (110) ausgelegt ist, sich in Bezug auf das röhrenförmige Element (130, 230, 330, 430, 530, 630) beim Weiterdrehen der Befestigungsschraube (110) anschließend zu drehen, während das röhrenförmige Element (130, 230, 330, 430, 530, 630) in Kontakt mit der Fahrzeugkarosserie (10) steht,
wobei das röhrenförmige Element (130, 230, 330, 430, 530, 630) eine Werkzeugeingriffstruktur (138, 138', 238, 338, 438, 538, 638) umfasst, die auf einer axialen Endfläche des röhrenförmigen Elements (130, 230, 330, 430, 530, 630) ausgebildet ist, das benachbart zur Fahrzeugkarosserie (10) an einer Position angeordnet ist, die von der Außenfläche (134a) und der Innenfläche (132a) des röhrenförmigen Elements (130, 230, 330, 430, 530, 630) radial beabstandet ist, und
wobei der Außengewindebereich (134a) des röhrenförmigen Elements (130, 230, 330, 430, 530, 630) und der Innengewindebereich (132a) des röhrenförmigen Elements (130, 230, 330, 430, 530, 630) so ausgelegt und angeordnet sind, dass ein Drehmoment, das zum Drehen des Innengewindebereichs (132a) in Bezug auf die Befestigungsschraube (110) erforderlich ist, größer als ein Drehmoment ist, das zum Drehen des Außengewindebereichs (134a) in Bezug auf die Montagebohrung des äußeren Elements (120) erforderlich ist, wodurch sich das röhrenförmige Element (130, 230, 330, 430, 530, 630) synchron mit der Drehung der Befestigungsschraube (110) drehen kann, während der Innengewindebereich (132a) des röhrenförmigen Elements (130, 230, 330, 430, 530, 630) im Gewindeeingriff mit dem Gewindebereich (112a) der Befestigungsschraube (110) steht, so dass das röhrenförmige Element (130, 230, 330, 430, 530, 630) angepasst ist, sich in Bezug auf das äußere Element (120) in eine Richtung zu bewegen, die aus dem äußeren Element (120) vorragt,
**dadurch gekennzeichnet, dass**
der Gewindebereich (112a) der Befestigungsschraube (110) im Gewindeeingriff mit dem Innengewindebereich (132a) des röhrenförmigen Elements (130, 230, 330, 430, 530, 630) in einem vollständig installierten Zustand steht, nachdem die Toleranzkompensations-Montagevorrichtung (100), das Fahrzeugbauteil (20) und die Fahrzeugkarosserie (10) zusammengebaut wurden, wobei
ein maximaler Abstand zwischen einer Mittelachse des röhrenförmigen Elements (130, 230, 330, 430, 530, 630) und der Werkzeugeingriffstruktur (138, 238, 338, 438, 538, 638) kleiner als ein minimaler Abstand zwischen der Befestigungseinsatzmittelachse und der Befestigungsöffnung (10a) der Fahrzeugkarosserie (10) in einer Ebene senkrecht zur Mittelachse des röhrenförmigen Elements (130, 230, 330, 430, 530, 630) ist.

2. Fahrzeugbauteil-Montageanordnung nach Anspruch 1, wobei
die Werkzeugeingriffstruktur (138, 238, 338, 438, 538) des röhrenförmigen Elements (130, 230, 330, 430, 530) einen Ausnehmungsabschnitt mit einer Werkzeuganschlag-Seitenfläche (138a, 238a, 338a, 438a, 538a) umfasst, die sich im Wesentlichen symmetrisch um die Mittelachse des röhrenförmigen Elements (130, 230, 330, 430, 530) erstreckt.

3. Fahrzeugbauteil-Montageanordnung nach Anspruch 2, wobei
der Ausnehmungsabschnitt der Werkzeugeingriffstruktur (138, 238, 338, 438, 538) eine konzentrische Ansenkung zu einem Schraubeneinsatzloch bildet, das durch die Innenfläche (132a) des röhrenförmigen Elements (130, 230, 330, 430, 530) definiert ist.

4. Fahrzeugbauteil-Montageanordnung nach Anspruch 1, wobei
die Werkzeugeingriffstruktur (638) eine Mehrzahl von Werkzeuganschlaglöchern (638a) umfasst, die in Bezug auf die Mittelachse des röhrenförmigen Elements (630) angeordnet sind.

5. Fahrzeugbauteil-Montageanordnung nach einem der Ansprüche 1 bis 4, wobei
das röhrenförmige Element (130, 230, 330, 430, 530, 630) einen ringförmigen Flanschabschnitt (136) umfasst, der sich am ersten axialen Endbereich in Bezug auf die Mittelachse des röhrenförmigen Elements (130, 230, 330, 430, 530, 630) radial nach außen erstreckt.

6. Fahrzeugbauteil-Montageanordnung nach Anspruch 5, wobei
der ringförmige Flanschabschnitt (136) des röhrenförmigen Elements (130, 230, 330, 430, 530, 630) eine Außenumfangsdrehmoment-Eingriffsfläche (136b) mit einer nicht kreisrunden Form aufweist, die ausgelegt und angeordnet ist, mit einem Werkzeug in Eingriff gebracht zu werden.

7. Fahrzeugbauteil-Montageanordnung nach einem der Ansprüche 1 bis 6, wobei
das äußere Element (120) als vom Fahrzeugbauteil (20) getrenntes und mit dem Fahrzeugbauteil (20) einstückig verbundenes Element ausgebildet ist.

## Revendications

1. Structure de montage de composant de véhicule comprenant :
un composant de véhicule (20) ;
une carrosserie de véhicule (10) comprenant une ouverture de fixation (10a) avec un axe central d'insertion de fixation ;
un dispositif de montage compensant les tolérances (100) couplant de manière fixe le composant de véhicule (20) à la carrosserie de véhicule (10), le dispositif de montage compensant les tolérances (100) comprenant :
une fixation filetée (110) s'étendant à travers l'ouverture de fixation (10a) de la carrosserie de véhicule (10) le long de l'axe central d'insertion de fixation, la fixation filetée (110) ayant une partie filetée (112a),
un élément externe (120) disposé entre la carrosserie de véhicule (10) et le composant de véhicule (20) avec l'élément externe (12) qui est couplé de manière fixe au composant de véhicule (20), l'élément externe (120) comprenant un alésage de montage ayant une partie filetée (122a), et
un élément tubulaire (130, 230, 330, 430, 530, 630) s'étendant entre la carrosserie de véhicule (10) et le composant de véhicule (20) avec une surface interne (132) ayant une partie filetée interne (132a) mise en prise par filetage avec la partie filetée (112a) de la fixation filetée (110) et une surface externe (134) ayant une partie filetée externe (134a) mise en prise par filetage avec la partie filetée (122a) de l'alésage de montage de l'élément externe (12), la partie filetée interne (132a) ayant des filetages opposés par rapport à la partie filetée externe (134a),
l'élément tubulaire (130, 230, 330, 430, 530, 630) étant en contact avec la carrosserie de véhicule (10) pour compenser un espace de tolérance formé entre le composant de véhicule (20) et la carrosserie de véhicule (10), et la fixation filetée (110) étant adaptée pour tourner ensuite par rapport à l'élément tubulaire (130, 230, 330, 430, 530, 630) suite à la rotation supplémentaire de la fixation filetée (110) alors que l'élément tubulaire (130, 230, 330, 430, 530, 630) est en contact avec la carrosserie de véhicule (10),
dans lequel l'élément tubulaire (130, 230, 330, 430, 530, 630) comprend une structure de mise en prise d'outil (138, 138', 238, 338, 438, 538, 638) formée sur une surface d'extrémité axiale de l'élément tubulaire (130, 230, 330, 430, 530, 630) disposée de manière adjacente à la carrosserie de véhicule (10) dans une position radialement éloignée de la surface externe (134a) et de la surface interne (132a) de l'élément tubulaire (130, 230, 330, 430, 530, 630), et
dans lequel la partie filetée externe (134a) de l'élément tubulaire (130, 230, 330, 430, 530, 630) et la partie filetée interne (132a) de l'élément tubulaire (130, 230, 330, 430, 530, 630) sont configurées et agencées de sorte qu'un couple requis pour faire tourner la partie filetée interne (132a) par rapport à la fixation filetée (110) est supérieur à un couple requis pour faire tourner la partie filetée externe (134a) par rapport à l'alésage de montage de l'élément externe (120), permettant ainsi à l'élément tubulaire (130, 230, 330, 430, 530, 630) de tourner de manière synchronisée avec la rotation de la fixation filetée (110) alors que la partie filetée interne (132a) de l'élément tubulaire (130, 230, 330, 430, 530, 630) est mise en prise par filetage avec la partie filetée (112a) de la fixation filetée (110) de sorte que l'élément tubulaire (130, 230, 330, 430, 530, 630) est adapté pour se déplacer par rapport à l'élément externe (120) dans une direction faisant saillie de l'élément externe (120),
**caractérisé en ce que** :
la partie filetée (112a) de la fixation filetée (110) est mise en prise par filetage avec la partie filetée interne (132a) de l'élément tubulaire (130, 230, 330, 430, 530, 630) dans un état installé fini après que le dispositif de montage compensant les tolérances (100), le composant de véhicule (20) et la carrosserie de véhicule (10) ont été assemblés, dans lequel :
une distance maximum entre un axe central de l'élément tubulaire (130, 230, 330, 430, 530, 630) et la structure de mise en prise d'outil (138, 238, 338, 438, 538, 638) est inférieure à une distance minimum entre l'axe central d'insertion de fixation et l'ouverture de fixation (10a) de la carrosserie de véhicule (10) dans un plan perpendiculaire à l'axe central de l'élément tubulaire (130, 230, 330, 430, 530, 630).

2. Structure de montage de composant de véhicule selon la revendication 1, dans laquelle :
la structure de mise en prise d'outil (138, 238, 338, 438, 538) de l'élément tubulaire (130, 230, 330, 430, 530) comprend une section d'évidement avec une surface latérale de butée d'outil (138a, 238a, 338a, 438a, 538a) s'étendant de manière sensiblement symétrique autour de l'axe central de l'élément tubulaire (130, 230, 330, 430, 530).

3. Structure de montage de composant de véhicule selon la revendication 2, dans laquelle :
la section d'évidement de la structure de mise en prise d'outil (138, 238, 338, 438, 538) forme un contre-alésage concentrique par rapport à un trou d'insertion de fixation défini par la surface interne (132a) de l'élément tubulaire (130, 230, 330, 430, 530).

4. Structure de montage de composant de véhicule selon la revendication 1, dans laquelle :
la structure de mise en prise d'outil (638) comprend une pluralité de trous de butée d'outil (638a) disposés de manière symétrique par rapport à l'axe central de l'élément tubulaire (630).

5. Structure de montage de composant de véhicule selon l'une quelconque des revendications 1 à 4, dans laquelle :
l'élément tubulaire (130, 230, 330, 430, 530, 630) comprend une section de rebord annulaire (136) s'étendant radialement vers l'extérieur au niveau de la première partie d'extrémité axiale par rapport à l'axe central de l'élément tubulaire (130, 230, 330, 430, 530, 630).

6. Structure de montage de composant de véhicule selon la revendication 5, dans laquelle :
la section de rebord annulaire (136) de l'élément tubulaire (130, 230, 330, 430, 530, 630) a une surface de mise en prise de couple périphérique externe (136b) avec une forme non circulaire qui est configurée et agencée pour être mise en prise par un outil.

7. Structure de montage de composant de véhicule selon l'une quelconque des revendications 1 à 6, dans laquelle :
l'élément externe (120) est formé comme un élément séparé du composant de véhicule (20), et couplé de manière solidaire au composant de véhicule (20).
